(19) Europäisches Patentamt
European Patent Office
Office européen des brevets

(11) **EP 1 780 517 B1**

(12) **EUROPEAN PATENT SPECIFICATION**

(45) Date of publication and mention
of the grant of the patent:
**28.12.2011 Bulletin 2011/52**

(21) Application number: **05772334.8**

(22) Date of filing: **04.07.2005**

(51) Int Cl.:
*G01D 18/00* *(2006.01)*

(86) International application number:
**PCT/RU2005/000372**

(87) International publication number:
**WO 2006/014123 (09.02.2006 Gazette 2006/06)**

(54) **METHOD FOR PRODUCING INDEPENDENT MULTIDIMENSIONAL CALIBRATING PATTERNS**

VERFAHREN ZUR HERSTELLUNG VON UNABHÄNGIGEN MEHRDIMENSIONALEN KALIBRATIONSMUSTERN

PROCEDE DE PRODUCTION DE MODELES D'ETALONNAGE MULTIDIMENSIONNELS INDEPENDANTS

(84) Designated Contracting States:
**AT BE BG CH CY CZ DE DK EE ES FI FR GB GR HU IE IS IT LI LT LU LV MC NL PL PT RO SE SI SK TR**

(30) Priority: **27.07.2004 RU 2004123573**

(43) Date of publication of application:
**02.05.2007 Bulletin 2007/18**

(73) Proprietors:
• **Zubkov, Vladimir Aleksandrovich**
**St. Petersburg, 193124 (RU)**
• **Zharinov, Konstantin Anatolyevich**
**St. Petersburg 198205 (RU)**
• **Shamrai, Aleksandr Valeryevich**
**St. Petersburg, 195267 (RU)**

(72) Inventors:
• **Zubkov, Vladimir Aleksandrovich**
**St. Petersburg, 193124 (RU)**
• **Zharinov, Konstantin Anatolyevich**
**St. Petersburg 198205 (RU)**
• **Shamrai, Aleksandr Valeryevich**
**St. Petersburg, 195267 (RU)**

(74) Representative: **Hano, Christian**
**v. Füner Ebbinghaus Finck Hano**
**Mariahilfplatz 2 & 3**
**81541 München (DE)**

(56) References cited:
EP-A2- 0 320 477    WO-A2-02/25233
SU-A1- 980 532    SU-A1- 1 679 367
US-A- 5 347 475    US-B1- 6 528 809

**Description**

FIELD OF THE INVENTION

The applied invention relates to analytical instrument-making, in particular, to the methods of development of calibration models for different types of measuring instruments which allow to determine one or several secondary properties of an inderminate sample based on results of measurements of many primary properties of this sample.

BACKGROUND OF THE INVENTION

In different fields of industry and scientific research there is a problem of simultaneous determination of one or several properties of a sample, for example, the octane number of gasoline or content of moisture, protein, and ashes in wheat grains. While determining the properties of the samples the following characteristics of measuring method as the speed of the analysis and keeping the samples intact during measurements are very significant. It is especially important in the industrial applications, in which nondestructive testing should be used at different stages of manufacturing.

Very often a property of interest cannot be measured directly, because the existing direct measuring techniques do not provide the necessary speed of the analysis or destroy the sample. A typical example is a problem of determination the concentrations of chemical components existing in analytical chemistry, since the traditional analysis based on chemical reactions leads to destruction of the sample and besides takes very much time. Therefore to solve this problem a number of indirect techniques have been developed for rapid nondestructive analysis of the sample properties in question, whereby these properties under analysis are determined by measuring several other properties of the sample which are dependent on the analysed properties, which, in contrast to the former properties, can be readily determined by a direct method during a short period of time and without the sample destruction. Often the mesuring properties of the samples are called "primary properties" and analysed properties of the samples which the results of the measurement depend on but which are not determined directly are called "secondary properties". One of the most effective indirect methods of research is the spectroscopic analysis, whereby the "secondary" properties like chemical composition of a sample are determined by measurements of their spectral characteristics like optical absorption, reflection, or scattering spectra which are their "primary" properties.

It is a crucial stage for any indirect method of analysis of the properties of a sample to find mathematical relationships between the results of the primary properties measurement and the values which characterise the analysed secondary properties. These mathematical relationships between the primary characteristics measured on the device and analyzable secondary properties of the sample are referred to as calibration models or, simply, calibrations.

Development of calibration models is one of the main tasks while using indirect methods. A procedure of the development of the calibration models is usually a laborious and time-consuming process, especially for the case of so-called multivariate analysis, when a large number of the primary properties are measured for each sample in order to determine quntitative characteristics of secondary properties of the sample. For example, in the case of spectroscopic analysis for determination of various components concentration measurements of different spectral data (level of absorbtion, reflection or dispertion) for different values of wave number (wavelengths, frequencies) are carried out.

Therefore, in order to develop a calibration model which provides a prescribed high accuracy of determination of the parameters which characterize the analyzed secondary properties of any sample, it is necessary to analyze a large number of samples similar to the ones which will be analyzed with the help of the device in future (calibration set of samples). The selection of the samples for the calibration set is usually specified in great detail by standards for different indirect methods of the analysis, for example, by the standard for the qualitative analysis with the help of NIR spectroscopy [1]. The samples of the calibration set should have known values of the parameters which characterize the analysed secondary properties determined with the help of direct reference method which has given accuracy and precision. In the example of spectroscopic analysis of chemical composition of the samples studied earlier the analysed properties of the samples of the calibration set can be determined preliminarily using standard chemical methods based on chemical reactions. The range of secondary properties changes of the calibration set samples should completely cover the range of possible changes of these properties during the analysis of the unknown samples. Moreover, to ensure stability of the calibration model the calibration set samples should be homogeneously distributed within the range of analysed properties changes.

Final conclusion about the selection precision of the calibration samples and stability of the developed calibration model can be drawn only after a standard validation procedure [1], estimation of the number of independent variables and identification of outliers. The problem of the model stability is crucial because it determines the scope of applicability of the developed model. In the case of an unstable calibration model, noise in the results of measurements of the primary properties can cause statistically significant changes in the prediction of the secondary properties. To enhance stability of a calibration model, the samples that have unusually high leverage on the multivariate regression are discarded from the calibration set. Outlier statistics (for example, the Mahalanobis statistics) are applied to identify these samples, which involve measurement data on the primary properties of the whole calibration set of samples.

Another important point which arises when using the calibration model for determination of the unknown sample secondary properties is the assessment of how accurately the developed calibration model describes a particular unknown sample and provides precise prediction of the sample secondary properties. The measured primary properties are also analysed according to outliers statistics. The Mahalanobis distance statistics can be used to estimate the calibration model applicability for the analysis of a particular sample.

The problem of the applicability of a calibration model for the analysis of an unknown sample is similar to the problem of qualitative analysis whereby a comparison of the measured primary properties (spectral data) with a library of the reference primary properties provides a conclusion about the chemical composition of the sample. Note that for estimation of the Mahalanobis distance, it is necessary to have complete information about the primary properties of each sample in the calibration set, and the measuring conditions for the calibration samples and the unknown sample being analyzed should be identical. Usually, samples whose analyses are found to be interpolations of the model can be analyzed with a proper accuracy. The Mahalanobis distance statistic can be used to estimate the calibration model applicability for analysis of a particular sample. The results of measurements of the primary properties of a sample and consequently, the accuracy of determination of the secondary properties are essentially dependent on the external conditions and performance characteristics of the instrument.Therefore, several methods of the development of calibration models weakly sensitive to variations of the external conditions and instrument parameters, as well as several methods of the calibration transfer among instruments have been proposed in order to take into account a difference in the instrument parameters and not to repeat a complicated process of the calibration construction on each instrument of the same type.

There is also a method of development multivariate calibration models [2, 3] which have low sensitivity to the parameters variations of the instrument used for mesurement and to the change of other properties of the sample. When using this method of development of calibration model mesurements of a great number of parameters which characterize primary properties for every sampple of so-called calibration set with known secondary properties are carried out. The samples of the calibration set are chosen in such a way that other properties will change in the maximum possible range. Besides when mesuring primary properties of the samples of the calibration set the parameters of the measuring instrument which is used for the development of the calibration model are changed intentioanally (for example, when using spectrometers spectral distortion and variation of the amplitude of the mesured signal are introduced). The value of the instrument parameters variations when developing a calibration model is determined by maximum possible values of these parameters variations which can be expected in different instruments or will occur when using. External conditions change is introduced additionally. The instrument parameters variations or other mesurement conditions can be introduced not only by carrying out actual mesurements but using mathematical manipulations.

This method allows to develop a multivariate calibration model which gives the results of sample secondary properties analysis which have little dependndancy on the conditions of mesurement and the instrument which has been used for these measurement that is why the calibration model is developed only once and is used without any changes on all the instruments of the same type. The intentional introduction of the reference data variance makes the calibration model more robust and extends the range of samples that can be analyzed.

Thus, this method of the development of multivariate calibration models takes into account possible variations of the instrument parameters, measurement conditions, and the other sample properties. Therefore, same calibration model can be used for all the instruments of similar type without changing. The intentional introduction of the reference data variance makes the calibration model more robust and extends the field of application of the calibration model which has been developed using this method.

However, the accuracy of the results of the analysis using a calibration model produced by this method will be the lower, since the variations of the measured primary properties are introduced during the calibration process. Moreover, there is a large number of factors affecting the results of the measurements, and it is not always possible to develop a mathematical model considering the influence of all of them.

Therefore, an enormous volume of measurements under different conditions and a great number of calibration samples with the different other properties are required for the development of a valuable calibration model which is able to consider the influence of a great number of factors. This makes a complicated process of development of a calibration model even more laborious and time-consuming. One more shortcoming of this method is a very difficult estimation of the model applicability for the analysis of a particular unknown sample since the reference data are disturbed intentionally and this can lead to the mistakes in the analysis of secondary properties. For example, it is possible that the model for determination of different chemical components concentrations in the sample would be used for analysis of an unknown sample that consists of other components and differs from the calibration samples significantly.

There is another approach to the development of the multivariate calibration models. In this approach, one does not attempt to build a calibration model operating on any instrument and considering any factors affecting the results of measurements. Instead, a method for transfer of results of measurements among different instruments is developed Thereby a calibration model produced on a single (reference) instrument can be used for determination of the secondary sample properties upon transferring the results of measurements of the primary sample properties to other (target) instrument.

J. Shenk et al. [4] offered a method of transfer of multivariate calibration model between the spectrometers. The method is based on the transformation of spectral data mesured on the instrument being calibrated to the form equivalent to the mesurement on the reference instrument which has been used for the development of calibration model. The secondary properties of the unknown samples are determined after the transformation of spectral data using the multivariate calibration model developed with a reference spectrometer.

Initially a calibration model is developed on a reference spectrometer using multivariate regression analysis methods (like multilinear regression MLR, primary components regression PCR or method partial least squares PLS) which help to determine the correlation between the known values of the parameters which describe the analyzed secondary properties of the calibration set samples and the spectral characteristics of these samples measured on the reference instrument (for example, absorbtion spectrum).

To transfer the calibration model to the calibrated instrument a set of samples (with known analyzable properties) for calibration transfer is used. It can be part of the samples from the calibration set. Spectral characteristics of the samples from the set for calibration transfer are mesured both on the reference and on the calibrated instruments. After that with the help of spectral characteristics results correlation of the same samples measured on the reference and calibrated spectrometers mathematical correlation allowing to transform spectral data measured on the calibrated instrument to the form equivalent to the results mesured on the reference instrument is found. The obtained mathematical correlations are used every time to transform the spectral characteristics of the unknown sample measured on the calibrated instrument. After that the calibration model developed on the reference spectrometer can be used to determine secondary properties of the unknown sample.

A more detailed procdure of determination of mathematical correlations for spectral data transformation looks like this. Firstly a wave number shift is determined. For wave number shift determination the correlation coefficient is determined between the correlation set for each spectral point on the reference instrument and the correlation sets of several spectral points on the target instrument which are closest to such spectral point on the reference instrument. Then it is assumed that these coefficients represent points on a quadratic dependence of the diffraction grating angular position in the calibrated instrument. The coefficients of the quadratic dependence are determined by the least squares method. The value of wave mumber at which maximum quadratic dependence is gained corresponds to the given value of wave number of the reference instrument from which the spectral shift for every point of spectral data of the reference instrument is determined. Such procedure of determination of spectral shift works well for the instruments with scanning difraction grating which is explained by the pecularities of their construction.

After determination of the spectral shift the procedure of linear interpolation of spectral data measured on the calibrated instrument is carried out and the values of amplitudes of the measured signal at given values of wave numbers corresponding to wave numbers of reference spectral data are obtained. Then the amplitude correction of interpolated spectral data is carried out and the coeffficients of linear relationship between interpolated spectral data and reference spectral data are calculated using the method of least squares. At some values of wave numbers it is not possible to find the correction coefficients because the values of spectral data at these points are zero. It can be a result of mathematical pre-processing of the initial measurements results (for example, differentiating of spectral data). In this case the coefficients for these wave numbers are found using interpolation.

So the results of this method of calibration transfer are developed with the help of reference instrument calibration model and data necessary for the transformation of the mesurement results of spectral characteristics on the calibrated instrument to the form equivalent to the measurements on the reference instrument which include the value of the spectral shift and the correction amplitude coefficients for every velue of the wave number. Among the disadvantages of this method are a narrow orientation to the spectrometers with scanning diffraction gratings and a large volume of computations carried out on the calibrated instrument during analysis of an unknown sample before the comparison of the measured spectral characteristics with the calibration model in order to determine the secondary properties. It increases the time of data processing and demands high computing power. These can be quite significant during the analysis of the product during the production process when the speed of obtaining data is a key parameter. Furthermore, when using this method the results of the measurement of the samples from the calibration set are not saved in the calibrated instrument, hence it is not possible to estimate the applicability of the calibration model for the analysis of a given unknown sample. This fact limits the sphere of application of this method to the cases when it is known beforehand that the unknown sample falls into the range of spectral data variations covered by the calibration set. Lack of data about the measurement results of the calibration set also does not allow the extension of the calibration instrument with the help of mesurement of additional calibration samples directly on the calibrated instrument since the complete information about the measurement results of all samples of the calibration set is required for this purpose. The extension of the calibration without such a check can lead to the instability of the calibration model.

More comprehensive description of the methods for transferring the calibration models is presented in [5] which gives several different methods of calibration models transfer. Although the patent describes the methods for transferring the calibration among spectrometers, these methods can be easily generalized to any other instruments for the analysis of one or several secondary properties of an unknown sample from the results of measurements of a plurality of the primary properties. Three different methods of the calibration transfer from the reference to the calibrated instrument are considered in this patent. Like in the method offered in [4] a calibration model based on the spectral data measured using the reference instrument for the calibration set of samples with known analyzed properties. Then several samples are selected from the calibration set. These samples make up a calibration transfer set which is measured on the calibrated instrument and is used to determine the correlation of calibration transfer. In order to provide high accuracy of the calibration transfer, the samples of the calibration transfer set should provide enough information about specific measurement of spectral data on different instruments. Therefore, the number of samples in the calibration transfer set should be not smaller than the rank of the coefficient matrix in the calibration model produced with the reference instrument. Then the results of measurements of the spectral data on the calibrated instrument are correlated with those for the same samples obtained on the reference instrument according to one of the methods offered.

In the first method, referred to as "classical", it is assumed that all secondary properties of the calibration samples related to instrument responses are known (for example, the concentration of chemical components which make up the samples). Then the relationship between spectral data and known properties of the sample is determined by two different calibration models for the reference and calibrated instruments. It can be expressed in the matrix form like this:

$$R_1 = CK_1$$
$$R_2 = CK_2 = C(K_1 + \Delta K). \qquad (1)$$

Here, R, is the matrix of the spectral data measured on the reference instrument and having m X n dimension; $R_2$ is the identical matrix obtained on the calibrated instrument; n is the number of spectral points, m is the number of samples of the calibration transfer set, C is the matrix of the secondary properties (concentrations) which has m X c dimension; $K_1$ is the reference calibration model, $K_2$ is the corrected calibration model presented in the form of coefficient matrices which have c X n dimension. The matrix of the correction factors is expressed as

$$\Delta K = C^+(R_2 - R_1), \qquad (2)$$

where $C^+$ is the pseudo or generalized matrix of the samples properties (matrix C is not quadratic in the common case).

Using equations (1) and (2) we can find the spectral data which could have been obtained by measurements of all calibration set samples on the calibrated instrument and then develop a new calibration model. So "classical" method of calibration transfer uses the known properties of samples from the calibration transfer set to determine correction coefficients. These coefficients determine the relationship between the secondary properties of the calibration transfer samples and primary properties of these samples measured on the calibrated instrument. Then on the basis of the known secondary properties and using these correction coefficients primary properties of every sample from complete calibration set emulating measurement of the calibration set on the calibrated instrument. Using measured values of the primary properties of the calibration set and known secondary properties of these samples a new calibration model for the calibrated instrument is developed with the help of regression analysis methods. This model is used further to determine secondary properties of the unknown sample according to the results of primary properties measurement of this sample on the calibrated instrument.

Classical calibration transfer method can be used only in the case when all properties of the sample from the calibration set are known (for example, we have the exact data about the concentration of all the components of the chemical elements). Moreover, the calibration transfer set is a subset of the full calibration set samples with all the secondary properties known to us. This method implies that the new corrected calibration model is stable and has the necessary accuracy although the validation procedure is not performed. As shown by experiment [5], the accuracy of the "classical" method is relatively low.

In the case when it is not necessary to determine all the secondary properties of the samples but we need only one property (for example, the content of protein) in [5] it was offered to use the "inverse" method of calibration transfer. A modification of the "inverse" method was also suggested in [6]. In this method, the amount of computations is significantly reduced in comparison with the "classical" method, because the concentration matrix is degenerated to vector "c" with dimension m and the calibration model is described by coefficient vector "b" of dimension n as well. Firstly using standard method of multivariate regression analysis a calibration model on the reference instrument is developed with the help of calibration set. This model determines the correlation between the spectral data matrix or the matrix of other primary properties of the samples from the calibration transfer set measured on the reference instrument ($R_1$) and the secondary property of these sample which is being determined.

$$c = R_1 b_1 \qquad (3)$$

Further more the measurements of the same samples from the calibration transfer set are carried out on the calibrated instrument. The coefficients of the calibration model are corrected in order to obtain known values of characteristics which describe the secondary properties of the samples from the calibration transfer set.

$$c = R_2 b_2 = R_2 (b_1 + \Delta b) \qquad \cdot (4)$$

Then the coefficient vector of the new calibration model can be expressed via the coefficient vector of the reference calibration model and inverse matrices of primary properties measurement (spectral data) from the calibration transfer set of the reference and calibrated instruments respectively.

$$b_2 = b_1 + \left( R_2^+ - R_1^+ \right) c \qquad (5)$$

Unlike the "classical" method of calibration transfer in the "inverse" method the correction of all the primary properties measurements of the calibration set for the purpose of reducing them to the form equivalent to the measurements on the calibrated instrument is not carried out. In this method the corrected coefficients of the calibration model are found on the basis of measurements of the calibration transfer samples and these coefficients are later used to determine the secondary properties of the unknown sample. This method can be extended to operate with more than one property at a time by converting the vectors into matrices.

The main advantage of this method of calibration transfer is that it does not require high computer power. Moreover the results of application of this calibration transfer method are the corrected coefficients of the calibration model developed on the reference instrument which are used directly to determine the secondary properties using the measurements of primary properties on the calibrated set. It reduces significantly the time of the analysis of the unknown sample.

However, in order to achieve high accuracy of the measurement of properties of the unknown samples on the calibrated instrument a large number of samples in the calibration transfer set should be used. The greater is the set of samples the higher the accuracy. Moreover, similar to the classical method, in the inverse method there is no possibility to estimate the applicability of the transferred calibration model for the analysis of the unknown sample measured on the calibrated instrument since we need information of the spectral data for all the samples of the calibration set measured in the conditions equivalent to the measurement of the unknown sample.

The third method of calibration transfer described in [5] was termed "direct" calibration transfer method. In this method the matrix of the measurements transformation (F) using the measurements of primary properties (spectral characteristics) of samples from the calibration transfer set obtained on the reference and calibrated instruments is found. This matrix determines the functional relationships between the primary properties measurements of random sample and measurements of the same samle on the calibrated instrument.

$$F = R_2^+ R_1 . \qquad (6)$$

After that the primary properties of the random sample measured on the calibrated instrument can be expressed in the form equivalent to the measurements of this sample on the reference instrument.

$$r_1' = r_2 F \qquad (7)$$

$r_2$ - the results of measurements of the primary properties on the calibrated instrument and $r_1'$ - the result of transformation of primary properties measurements on the calibrated instrument to the form equivalent to the measurements on the reference instrument.

In this method mathematical correlations link up every value of the primary properties of the sample transformed to the form equivalent to the measurements on the reference instrument with every value measured on the calibrated instrument. This means that every point in spectral data transformed to the form of the reference instrument is a function of spectral data measured on the calibrated instrument.

This makes the calibration tranfer more accurate but it is also the reason for one of the shortcomings of this method. The transformation of the spectral data using the "direct" method requires high computer power and can cause the increase in the cost of the instrument. The number of samples in the calibration transfer set should at least be equal to the rank of the spectral data matrix for the complete calibration set measured on the reference instrument and the measurement transformation matrix used in this method has the n X n dimension, where n is the number of spectral points where the measurements are being carried out. Mind that n is usually a great number and its value can be more than 100. Besides every time before the determination of the analyzed secondary properties of the sample it is necessary to carry out mathematical transformations of the measured data to the form of the reference instrument which can increase the time of the analysis.

Note that in the described direct method of the calibration transfer primary properties of the samples measured on the calibrated instrument are transformed to the form which is equivalent to the reference instrument and then for determination of the analyzed secondary properties the calibration model created on the reference instrument is used. The calibration model developed on the reference instrument should undergo the standard validation procedure [1] which guarantees the robustness of the model but can not be sufficient to provide the robustness of the model during the analysis of the measurement obtained on the calibrated instrument and transfomed to the form equivalent to the measurements on the reference instrument. To reach this the measurements of the unknown sample should be analyzed for the presence of outliers with the help of statistics of outliers prediction (for example, Mahalanobis statistics). For this we need not only the data of constants in mathematical correlations of the calibration model but the information of the measurements of the samples from complete calibration set.

Therefore in some cases it is good to have a separate "independent" calibration model. When using the term "independent model" we mean a calibration model which is developed separately for every calibrated instrument, minds all the pecularities of this instrument, gives an opportunity to evaluate its applicability for this or that unknown sample and guarantees robustness. An independent calibration model can be extended with the help of simple measurements of extra calibration samples on the calibrated instrument without the use of the reference instrument (for example, for the calibration model correction when changing the parameters of the calibrated instrument during usage (aging).)

There is a method of calibration models transfer between the instruments [7] which is also oriented to calibration transfer between spectrometers. This method is the closest to the claimed invention. This method includes determination of spectral transfer function of the reference and calibrated spectrometers using the measurements of spectral data on both instruments for monochromatic source of light, determination of correlation between spectral transfer functions of the reference and calibrated spectrometers and determination of mathematical correlation of measurements transformation of the reference instrument to the form equivalent to the measurements on the calibrated instrument. It also involves selection of calibration set samples with known analyzed properties, measurements of spectral characteristics of each sample of the calibration set on the reference instrument, transformation of spectral data for the calibration set samples measured on the reference instrument to the form equivalent to the results of measurements on the calibrated instument using the obtained correlations and development of the calibration model for the calibrated spectrometer with the help of regression correlation analysis between the known properties of the calibration set samples and transformed spectral data.

The calibration model developed on the calibrated instrument with the help of this method is completely independent from the reference instrument. This method provides an opportunity not to repeat the measurements of the calibration set samples on every calibrated instrument but it uses the data measured on the reference instrument and transformed to the form of the calibrateed instrument. Such calibration model can be easily extended and added to using the measurements of additional calibration samples on the calibrated instrument itself. However, to obtain mathematical relationships for the transformation of the measurements on the reference instrument to the form equivalent to the calibrated instrument the comparison of the responses of the both instruments to the same monochromatic source of light are used. Therefore, this method can be applied only to calibration of spectrometers and cannot be used for instruments based on other principles whereby other non-spectroscopic primary properties are measured. It should be noted that, in order to obtain a high accuracy of the calibration model transfer the monochromatic light source should show outstanding stability. Such source of light is quite expensive and there for not always affordable. The main disadvantage of this method is that using one monochromatic line of radiation does not allow to obtain exact correlation for spectral data transformation. The theory of spectral transfer function is developed for linear approximation. However very often variations in instrument characteristics have non-linear character (for example, wave shift on the instruments with scanning difraction grating) [4]. So using mathematical transformations obtained with the help of this method can lead to incorrect results of spectral data transfer in the case of non-linear variations in the instruments. Moreover, in this method a difference in intensity and spectrum of polychromatic light sources in the calibrated spectrometers are not taken into account.

SUMMARY OF THE INVENTION

The object of the invention is to create another method for the development of independent multivariate calibration models for determination of secondary sample properties from measurements of a plurality of primary sample properties not necessarily spectral which provides high accuracy of determination of the analyzed properties and takes into account non-linear diffrerences of technical parameters of the calibrated and reference instruments and the influence of the work conditions and besides gives an opportunity for extension and addition with the help of measurements of additional calibration samples on the calibrated instrument.

This object is achieved by a method of independent multivariate calibration models development which consists of the sequence of operations united by common inventive conception.

This method includes selection of calibration set samples with known secondary properties using spesific reference methods; measurement primary properties of every sample from the calibration set with known secondary properties on the reference instrument and transformation of the measurements of the primary properties of the calibration set samples using correlation of calibration transfer to the form equivalent to the calibrated instrument; development of the calibration model with the help of regression analysis methods using transformed calibration correlation data allowing to determine the analyzed secondary properties of the unknown sample according to the measurements of the plurality of the primary properties of this sample carried out on the calibrated instrument. This method of regression analysis is different because the the correlation of calibration transfer is found by the selection of calibration samples transfer and measuring the primary properties of every sample of the calibration transfer set on the reference and calibrated instruments and comparing the measurements of primary properties of the samples from the calibration transfer set obtained on the reference instrument with the measurements of the primary properties of the same samples obtained on the calibrated instrument with the help of regression analysis methods. Then the obtained correlations of calibration are chosen as the optimal calibration model using the procedure of checking the accuracy (validation).

The usage of calibration transfer set allows to take into account non-linear change in the characteristics of the instruments since for obtaining the correlations of the results transformation several dependancies of primary properties change are used. Besides all the measurements of the calibration set samples are transformed to the form equivalent to the measurements on the calibrated instrument and are saved in the computer memory of the calibrated instrument. This makes the model developed using this method completely independent from the measurements on the reference instrument and allows to perform the analysis of outliers using the statistics of outliers when measuring the unknown sample which guarantees high accuracy of determination of the analyzed secondary properties.

Various methods of selection of calibration set samples are offered.

Validation on the final stages guarantees that the developed model meets the prescribed accuracy of the analysis of the secondary properties of the unknown samples. Calibration validation is performed by the comparison of the secondary properties of the samples determining them from the measurements on the calibrated instrument using the calibration correlation with the direct mesurements of the secondary properties using reference methods.

There is an opportunity for the extension of the developed model for the purpose of the increasing the accuracy of the analysis and robustness of the model with the help of addition the results of measurement of the primary properties of the calibration set samples transformed to the form equivalent to the calibrated instrument to the results of the measurement of the primary properties of additional calibration set samples with known secondary properties carried out on the calibrated instrument and determining the calibration correlation on the additional calibrated data. The developed calibration model is completely independent from the similar calibration model developed on the reference or any other instrument.

There is an opportunity of adiitional calibration data transfer to another instrument including the inverse transfer to the reference instrument. After that a new calibration model is developed and the instrument which has been used for measurement of the additional calibration samples is now a new reference instrument.

In order to increase the accuracy of the developed calibration model it is offered to use the statistics of outliers and exlude from the model the outlying calibration set samples before the determination of calibration correlation.

It is offered to use the procedure of result and reference data normalization which provides minimal inaccuracy of determination of the analyzed secondary properties and allows to take into account the technical pecularities of the instrument used for the measuring and differences in samples preparation and the condition of the sample under analysis. The procedure of normalization is the selection of this or that method of mathematical pre-processing. The criterion for the selection of pre-processing is the accuracy of the secondary properties analysis which is provided by the calibrated instrument with the calibration developed using this kind of mathematical pre-processing. Quantitative parameters of validation procedure of the calibration model are used as the main quantitative criteria (for example, standard mistake of cross-validation) [1].

Also the pecularities of realization of the offered method on the spectrometers using the principles of Fourier-transform spectroscopy are being examined.

The main point of the invention is that the offered collection of characteristics allows to develop on the calibrated instrument completely independent model which provides an opportunity to predict with high accuracy the secondary properties of the unknown samples using the measurements of the primary properties (not necessarily spectroscopical). This model also considers non-linear differences in technical parameters of the calibrated and reference instruments and also the work conditions. The calibration model is developed using the data of the primary properties of the calibration set samples measured on the reference instrument and transformed to the form of the measurements equivalent to the calibrated instrument. The form of the measurements of the calibration set sample equivalent to the measurements on the calibrated instrument is determined from the measurements of the calibration transfer set. The calibration transfer set has less number of samples than the calibration set. The samples from the calibration transfer set provide considerable differences in the measurements of the whole range of the primary properties both on the reference and the calibrated instruments. The use of the samples of the calibration tranfer set allows to determine non-linear relationship between the results of the measurements of the same samples on different instruments with the help of correlation analysis using regression methods. Besides since the developed calibration model is completely independent and while developing the measurements of the primary properties of the calibration set transformed to the form of the calibrated instrument are used the evaluation of applicability of this model for the analysis of the unknown sample can be done using standard methods of statistics of outliers (for example, by detrmination of Mahalanobis distance). To increase the accuracy of the analysis the calibration model can be added with the help of measurements of additional calibration samples on the calibrated instrument. Besides it is offered to use the procedure of normalization using different kinds of mathematical pre-processing of the measurement results and secondary properties data (reference data) which allow to consider the influence of interference factors like differences in samples preparation and in the condition of the samples.

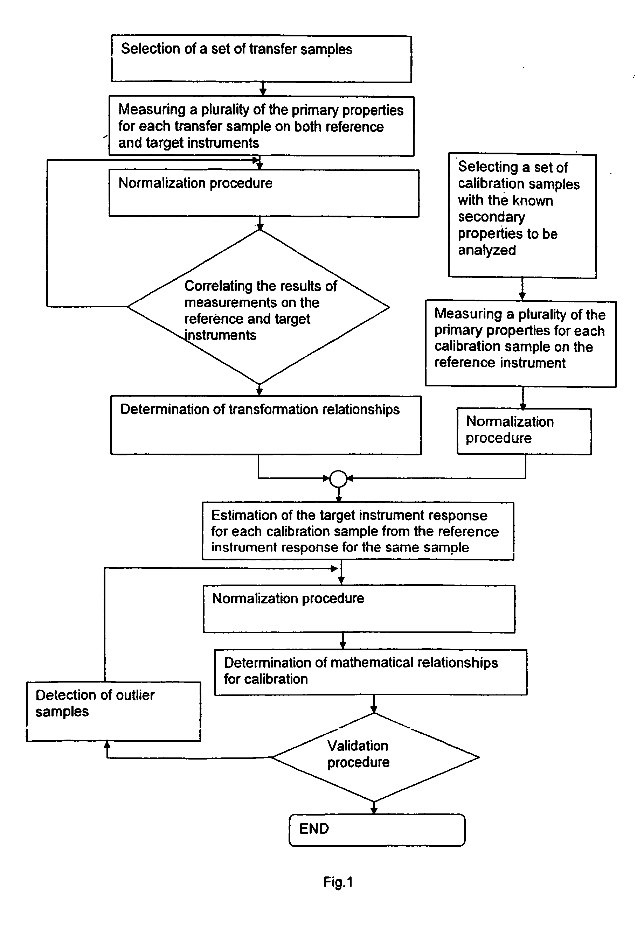

The idea of the claimed invention is explained by fig.1 where there is a schematic pictuer of the claimed method in the form of a flow chart.

The claimed method of the development of independent calibration models can be used for any measuring instrument which determine parameters characterizing secondary properties on the results of multiple measurements of the primary properties (for example, infrared spectrum analyzers which determine the absorbtion of light by the sample at different wavelength of the radiation). Such results are usually called spectral data or just spectra. Lets consider the application of the claimed method on the spectrometers for the analysis of the chemical composition of the sample. But it is necessary to emphasize that the sphere of application of the claimed method is not restricted by spectroscopy only and in the description given below spectrometers are used only as obvious examples.

As we have already said the calibration model determines the relationship between the measurements results (spectrum in the case of spectrometer) and the analyzed properties of the sample.

We should note that very often the analyzed properties of the sample are compared not with the measurement results but the spectral data which has already passed the procedure of normalization (preliminary mathematical pre-processing). For example, evening out of spectra, subtraction of the base line or differentiation can be carried out. The type of preliminary mathematical processing while normalization procedure is chosen according to the principle of the maximum accuracy of determination of the analyzed secondary properties thus the performed mathematical operations should transform the spectral data in such a way that in the transformed spectral data the influence of the examined properties appeared in the distinct manner and the influence of the secondary factors connected with the spurious dispersion and the pecularities of sample preparation was minimal. The same mathematical pre-processing is applied to all the spectra of the samples from the calibration set. It means that before the mathematical pre-processing the look of the spectra changed insignificantly when changing the analyzed properties of the sample but after normalization the transformed spectral data has distinct changes even when changing the analyzed properties insignificantly. For the evaluation of the accuracy of the prediction such statistics characteristics of the calibration model as standard error of calibration (SEC), standard error of validation (SEV) and standard error of cross validation (SECV)are used [1]. The most popular type of mathematical pre-processing in spectral analysis is obtaining of weighted values of spectral data [8]. This type decreases by 1 the number of degree of freedom in the calibration model. In this pre-processing average spectrum for the whole calibration set is found and it is subtracted from every individual spectrum of the calibration samples. The weighted values of the reference data are found in the similar way. Then during the analysis of the unknown sample before the application of the developed calibration model an average of the calibration set spectrum is subtracted from the measured spectrum.

To develop a calibration model for spectrometer initially the measurements of the spectral dat for a great number of samples (calibration set) are carried out. The samples of the calibration set for the spectral analysis are selected according to the following criteria [1]: a) the sample should contain all the chemical components which are planned to analyze; b) the range of variation of the analyzed components concentration should be more than the range of variations in the analyzed unknown samples; c) the values of variations of chemical components concentration from sample to sample should be evenly distributed on the whole range of variations; d) the number of samples should provide obtaining mathematical correlations between spectroscopic data and concentration of separate chemical components with the help of statistical methods. Determination of outliers from the calibration set is performed with the help of statistical analysis of outliers (for example, determination of Mahalanobis distance [1]). Mahalanobis distance is determined like this:

$$D^2 = r'(R \cdot R')^+ r \qquad (8)$$

where R is the matrix of spectral data of complete calibration set, r is the vector corresponding the spectrum of a single sample. Mahalanobis distance shows the number of degrees of freedom brought to the calibration model by this sample. On average every calibration sample should bring k/m, where k is the number of the variables in regression, m is the number of samples in the calibration set. Samples with $D^2 > 3k/m$ should be excluded from the calibration set. A greater value of Mahalanobis distance means that the spectrum of this sample almost completely determines one of the regression coefficients which makes the model unstable. This can happen when the homogeneity and evenness of the distribution of the analyzed properties of the calibration samples on the variation range is disturbed, i.e. the composition of the sample differs significantly from other samples of the calibration set. Also the samples which have significantly different values of the analyzed properties measured with the developed model in the comparison to the reference model should be excluded from the calibration set. These samples are determined according to Student's discrepancy calculated using this formula:

$$t_i = \frac{e_i}{SEC\sqrt{1 - D_i^2}} \qquad (9)$$

Here $e_i$ is the difference of the concentration of the chemical component or the analyzed property value obtained with the help of calibration model and the reference value of i calibration set, SEC is the standard error of calibration [1], $D_i^2$ is the Mahalanobis distance for the i calibration sample. Student's discrepancy should be evenly distributed according to the normal law. The value of discrepancy is compared to the Student's coefficient for the confidence probability 0.95 and the number of freedom degrees m-k. In the case when the value of discrepancy is more than the coefficient the sample is excluded from the calibration set.

The examined properties of the samples of the calibration set are known in advance or measured with the reference method (for example, with the help of traditional chemical method using reagents). As the optical measurements during spectral analysis are carried out with the given volume of the sample determined by the lengthof the optical path it is preferable that the optical data is expressed in the values of volume. High requirements are made to the accuracy and repeatability of the reference method since the accuracy of the spectral analysis is directly dependent on it. The accuracy of the reference method can be increased by multiple determination and averaging of data.

After measurements of the spectral data of the calibration set samples on the reference instrument a multivatiate calibration model can be developed. The familiar mathematical methods of regression analysis like multivariate linear regression (MLR), principal components analysis (PCA), method of partial least squares (PLS) or artificial neural network (ANN) are used. Then measuring the spectrum of the unknown sample on the reference instrument and using the developed calibration model we can determine the analyzed properties (for example, concentration of one or several chemical elements, percentage composition of protein, fat or starch).

The developed calibration model allows to predict the properties of the samples with great accuracy measuring their spectra on the spectrometer used for the measurements of all the samples of the calibration set. When using another spectrometer (even of the same type) the accuracy of prediction when using a calibration model developed on another instrument decreases significantly. It is connected with the variations of technical characteristics of spectrometers and different operating conditions. Besides it can happen so that the variations of the spectral data of the same sample measured on different instruments extend the sphere of application of the developed calibration model determined by the accepted value of Mahalanobis distance. Then the calibration model developed on the reference instrument can not be used for the analysis at all.

So for the accuracy of prediction of the properties of the unknown samples on every instrument it is necessary to have an independent model considering non-linear differences in the instruments characteristics and giving the prescribed accuracy of the analysis and allowing evaluation of the applicability of the model for the analysis of the unknown sample with the help of outlier statistics (for example, by determonation of Mahalanabis distance). Besides during the operation the technical characteristics of the instruments can change which can lead to the decreasing of the accuracy of predictions and there arises a necessity to develop a new calibration model.

The claimed method allows to develop completely independent calibration models fro different instruments and perform the correction of already developed calibration model without the measurement of the complete calibration set of samples on the calibrated instrument. For the development of a new calibration model spectral data measured on the reference instrument and transformed to the form equivalent to the calibrated spectrometer is used. The sphere of applicability and robustness of the new calibration model are analyzed according to the transformed spectral data.

So all the data of the measurements results of the samples of the calibration set is transformed to the form equivalent to the measurements on the calibrated instrument. During the analysis of the unknown sample it can be used fro evaluation of outliers (for example, by determination of Mahalanobis distance for the spectrum of the unknown sample measured on the calibrated instrument).

For determination of correlation of spectral data transformation of the calibration set samples to the form equivalent to the results of measurements on the calibrated instrument a set of samples (not necessarily with known analyzed properties) is used. Further it is called calibration transfer set. The spectrum of each sample from the calibration transfer set is measured on both the reference (which was used to measure the spectra of the calibration set samples) and on the calibrated (for which a new calibration model is developed) instruments. With the help of correlation of the spectral data for the samples from the calibration transfer set measured on the reference and calibrated instruments the correlations which allow to transform the spectra measured on the reference instrument to the form equivalent to the measurements on the calibrated instrument. For the correlation one can use the results of the measurement themselves and spectral data obtained after the procedure of normalization. The procedure of normalization is preliminary mathematical processing. The same mathematical transformations are used for all the measured spectra. The mathematical transformation should provide finding distinct differences in spectral data measured on different instruments which ensures more accurate determination of equations for spectral data measured on the reference instrument transformation to the form equivalent to the results of the measurements on the calibrated instrument.

After the equations for the spectral data transformation are found the spectral data for every sample from the calibration set can be transformed to the form equivalent to the measurements on the calibrated sample. Then using standard methods of the multivariate regression analysis (MLR, PCA, PLS etc. [8]) using the transformed spectral data a calibration model for the calibrated instrument is developed. After that the properties of the unknown sample can be determined according to the measurements of the spectral data on the calibrated instrument using the new independent calibration model.

In the claimed method most part of calculations on the transformation of the spectral data is carried out on the stage of development of the calibration model but not on the stage of the sample analysis (it does not require laborious transformation to the form equivalent to the measurements on the reference instrument). That allows to reducr the time of the analysis.

We should also note that the claimed method develops a completely independent calibration model on each calibrated instrument though the measurement of the samples of the calibretion set are carried out only once. The transformation of the spectral data for every sample of the calibration set allow to perform the search of outliers for this particular instrument which guarantees the robustness of the developed model.

During the analysis of the unknown samples the independence of the calibration model gives an opportunity to evaluate the measurements for the outliers in spectral data (for example, with the help of Mahalanobis statistics) that allows to evaluate the applicability of the developed calibration model and the expected accuracy of the sample.

For the transfer of the spectral data of the calibration set to the calibrated instrument a specially selected transfer set of samples is used. The number of samples is less than in the complete calibration set and their properties can be unknown but it is important that this set of samples provides significant variations in the measured spectral data allowing to obtain the transformation equations.

The independence of the calibration model gives an opportunity to add and extend the calibration with the help of additional calibration samples measurements with known (or measured with reference methods) analyzed properties on the calibrated instrument directly. The spectra of additional samples which can be checked for the presence of outliers using Mahalanobis statistics are added to the matrix of the spectral data transformed to the form of the complete calibration set.

Such an extension allows to increase the accuracy of the results of the analysis of the properties of the unknown samples with better consideration of characteristics features of the calibrated instrument, operation conditions and pecularities of the analyzed samples (preparation of the samples, purity etc). For example if the instrument performs the measurements of the product on some stage of production all the previous stages of its production can influence not only the analyzed properties of the sample but on all the other properties too reflected in the variations of the measured spectral data which can lead to the inaccurate prediction of the analyzed properties. To increase the accuracy of predictions of the measurements additional calibration samples after all the previous processing stages and with exactly determined properties can be added to the calibration model. Another example is addition to the calibration model of the agricultural production samples grown in a particular region or gathered during the particular time.

The independence of the calibration model developed using the calimed method allows to transfer the model which has already been added on the calibrated instrument to any other instrument using the same method as in the transfer from the reference instrument to the calibrated instrument. It is very convenient because it allows to accumulate the calibration data. For example during the expansion of production and launch of a new line added calibration which takes into consideration the peculiarities of the production cycle and the used raw material obtained on the instrument working on the already active line can be used.

As far as for the development of every new independent calibration model a complete set of spectra for all the samples of the calibration set transformed to the form of the calibrated instrument is used this method allows to evaluate the outliers for the analyzed unknown sample directly on the calibrated instrument (for example, using the Mahalanobis distance).

Another advantage of this method is that because of the independence of the calibration model that the spectral data for all the samples from the calibration set after transformation can be subjected to the normalization procedure with the help of additional mathematical processing. So we get the opportunity to use its own independent method of preliminary mathematical processing which takes into consideration the peculiarities of every separate instrument on every calibrated instrument while performing the normalization procedure which significantly increases the accuracy of the predictions. It is especially useful when the calibration model is transferred from the reference instrument of one type to the calibrated instrument of another type (for example, from the spectrometer based on the scanning difraction grating to the spectrometer using principles of the Fourier-transform spectroscopy).

We should note that the claimed method can be used also for re-calibration of one instrument when it is necessary to consider the change in the characteristics which appear in the process of operating (aging).

For the illustration of the claimed method we shall give the example of development of independent calibration models for determination the quality indeces of the wheat on several spectrometers InfraLUM FT - 10 located on different elevators of the Krasnodar region. This type of spectrometers uses the principles of the Fourier-transform spectroscopy in the nearest infrared point of the spectrum (NIR). We should mention once again that this example is given only for the illustration and clearer understanding of the basic principle of the claimed method and it does not limit the sphere of application of the present invention.

Firstly the measurements of the calibration set spectra are carried out on the reference spectrometer. In the spectrometers of InfraLum FT - 10 type the measured spectra of the samples undergo the following procedure of normalization which considers the peculiarities of the instruments working on the passing-through and using the principles of the Fourier-transform spectroscopy.

The spectrum averaged for the whole calibration set is calculated.

$$\overline{R}_j = \frac{\sum\limits_{i=1}^{N} R_{i,j}}{N} \qquad (10)$$

where N is the number of samples in the calibration set, j is the order number of the wavelength used for the measurements, $R_{i,j}$ is the measured spectral data for the i sample at j value of the wavelength. The averaged spectrum is subtracted from every spectrum of the calibration set. The weighted values of the spectral data is obtained like this.

$$R_{i,j(MC)} = R_{i,j} - \overline{R}_j \qquad (11)$$

The weighted values for the reference data of the calibrated samples are obtained in the similar way. After obtaining the weighted values the spectral and reference data can be subjected to the procedure of discrepancy scaling when the value in every point of the spectrum is divided into standard discrepancy of values in this point on the whole calibration set. The standard discrepancy is calculated according to the formula:

$$Rv_j = \sqrt{\frac{\sum\limits_{i=1}^{N} \left(R_{i,j(MC)}\right)^2}{N}} \qquad (12)$$

In other variant of preliminary mathematical processing of spectral data the spectral rating on the root-mean-square discrepancy is performed. The arithmetic average for all the wavelengths is calculated for every spectra from the calibration set.

$$\bar{r}_i = \sum_{j=1}^{p} R_{i,j} \Big/ p \qquad (13)$$

where p is the number of wavelengths used for the measurements. Then from the values in every spectral point the arithmetic average is being subtracted and the obtained difference is rated by root-mean-square discrepancy for the given spectrum.

$$R_{i,j(SNV)} = \frac{R_{i,j} - \bar{r}_i}{\sqrt{\sum_{j=1}^{p} \left(R_{i,j} - \bar{r}_i\right) \Big/ p - 1}} \qquad (14)$$

If the alignment of the base line is performed during the procedure of normalization then the spectral data is approximated by the polynomial of the square.

$$y(x) = a_1 + a_2 x + a_3 x^2 \qquad (15)$$

After writting down the equation [15] in the matrix form we obtain

$$b = a \cdot X$$

$$b = \begin{bmatrix} y(x_1) \\ y(x_2) \\ y(x_3) \\ \dots \\ y(x_p) \end{bmatrix}; \quad X = \begin{bmatrix} 1 & x_1 & x_1^2 \\ 1 & x_2 & x_2^2 \\ 1 & x_3 & x_3^2 \\ & & \\ 1 & x_p & x_p^2 \end{bmatrix}; \quad a = \begin{bmatrix} a_1 \\ a_2 \\ a_3 \end{bmatrix} \qquad (14)$$

Approximation coefficients are calculated according to the formula.

$$a = \left(X^T * X\right)^{-1} * X' * b$$

Where $X^1$ is the transposed matrix X. After obtaining approximation coefficients in every spectral point the corresponding value of polynomial approximant is subtracted.

After performing the procedure of normalization of the results of spectral measurements the obtained spectral data is compared with the known properties of the samples of the calibration set also passed through normalization procedure and then the mathematical correlation between the spectral data and the properties of the samples known from the reference analysis is found. The obtained correlation determine the calibration model for the reference instrument.

As we have already mentioned before the type of the mathematical processing of spectral data for normalization is selected on the basis of the accuracy of prediction the properties of the unknown sample using this method of data processing. The statistical parameters of the calibration model are used as accuracy criteria.

One of such parameters is the standard error of calibration (SEC) which provides the evaluation of the degree of agreement of the properties predicted on the basis of spectral measurements with the help of calibration model and the properties determined by the reference method.

$$SEC = \sum_{i=1}^{N} \sqrt{\frac{\widetilde{e_i}^2}{d}} \qquad (15)$$

where $e_i = \widetilde{y}_i - y_i$ is the error of calibration for the i sample of the calibration set, $\widetilde{y}_i$ are the predicted properties, $y_i$ are the properties determined by the reference method. $d = N - k$ is the number of freedom degrees of the calibration model, N is the number of calibration samples, k is the number of variables dependent on the mathematical method used for development of the model.

For the evaluation of the model robustness the validation procedure is carried out [1]. The standard error in cross validation allows to evaluate the maximum number of the degrees of freedom which should be used while developing the model. For the evaluation of SECV one or more calibration samples are excluded from the matrix of the spectral data and the model is created without these samples. Then the developed model is used to evaluate the analyzed properties of the excluded samples. The procedureis repeated until every sample of the calibration set is excluded at least once.

$$SECV = \sqrt{\frac{\sum_{i=1}^{N} (\hat{y}_{cv_i} - y_i)^2}{N}}$$

where $\widetilde{y}_{cv}$ is the vector containing the evaluation of cross validation.

Validation of the additional set is determined by the paramter of standard error of validation (SEV) which characterizes the discrepancy from the reference values while analyzing the samples from the additional set.

$$SEV = \sqrt{\frac{\sum_{i=1}^{n} (v_i - \hat{v}_i)^2}{d_v}} \qquad (17)$$

where $d_v$ is the common number of the reference values of the analyzed parameter for all the spectra of the additional set; $v_i$ are the reference values of the analyzed component for the i spectrum of the additional set; $\widetilde{v}_i$ are the predicted values of the analyzed component for i spectrum of the additional set.

The main characteristics of the initial calibration created on 145 samples of wheat on the reference instrument are given in the table 1.

Table 1 The results of calibration on the reference instrument.

| Index | SEC | SECV | SEV |
|---|---|---|---|
| Protein | 0.41 | 0.41 | 0.34 |
| Gluten | 0.62 | 0.69 | 0.65 |
| Glass | 2.56 | 2.74 | 2.37 |
| Moisture | 0.19 | 0.20 | 0.25 |

For the development of new independent calibration models on the calibrated instruments a calibration transfer set is needed. During the experiments several samples were selected from the calibration set. We should note that the samples from the calibration transfer set in the common case can not belong to the calibration set. Two separate transfer sets were selected.

The first set was selected according the parameter score [8] i.e. from the calibration set the samples with maximum and minimum value of the parameter for some of the index (for example, protein) were selected. The best calibration transfer is obtained when to these samples are added the samples with the extreme values of score on other indeces (for example, for the moisture and gluten). 10 samples for the transfer which were used for the development of independent calibration models on 14 instruments were selected.

In the second case the samples were used so that their reference data were evenly distributed on the whole range. In this case 10-16 samples are enough for the development of independent calibration models. In this case calibration set spectral data transfer was performed from the reference instrument to 5 calibrated on protein and gluten instruments. When the number of samples was less than 10 or more than 20 the value of SEV for new calibration was worse.

According to the claimed method the same samples for the calibration transfer were measured on all the calibrated instruments. After that using the correlation of the spectral data of the reference and calibrated instruments the equations for the transformation of the spectral measurements results on the reference instrument to the form of the calibrated instruments were obtained. The characteristic feature of InfraLUM FT-10 spectrometers using the principle of the Fourier-transform spectroscopy is that the measured spectra have constant values of the wavelengths (wave numbers) at which the measurements are being carried out which is provided by the locked laser [8]. This fact significantly simplifies the way of obtaining of mathematical correlations for the transformation of the spectral data measured on the reference instrument to the form equivalent to the results of the measurement on the calibrated instrument. In the simplest way these correlations can be determined with the help of the method of the linear regression using the comparison of the results of the measurements of spectral data for the samples from the calibration transfer set carried out on the reference and calibrated instruments.

$$R_{i,j}^{s} = a_i' + a_i'' R_{i,j}^{m} \qquad (18)$$

where $R_{i,j}^{s}$ are the values of the spectral data measured on the calibrated instrument (i wavelength, j sample from the calibration transfer set), $R_{i,j}^{m}$ is similar spectral data measured on the reference instrument. The spectral data can be subjected to the procedure of normalization (preliminary mathematical processing) but the transformation way is the same for both the reference and the calibrated instruments. Regression coefficient are determined with the help of the least squares method.

$$a_i' = \left( \sum_{j=1}^{c} R_{i,j}^{m\,2} * \sum_{j=1}^{c} R_{i,j}^{s} - \sum_{j=1}^{c} R_{i,j}^{m} * R_{i,j}^{s} * \sum_{j=1}^{c} R_{i,j}^{m} \right) \bigg/ \left( c * \sum_{j=1}^{c} R_{i,j}^{m\,2} - \left( \sum_{j=1}^{c} R_{i,j}^{m} \right)^2 \right)$$

$$a_i'' = \left( c * \sum_{j=1}^{c} R_{i,j}^{m} * R_{i,j}^{s} - \sum_{j=1}^{c} R_{i,j}^{m} * \sum_{j=1}^{c} R_{i,j}^{s} \right) \bigg/ \left( c * \sum_{j=1}^{c} R_{i,j}^{m\,2} - \left( \sum_{j=1}^{c} R_{i,j}^{m} \right)^2 \right)$$

where c is the number of samples in the calibration transfer set.

After obtaining the coefficients of regression spectral data for every sample of the calibration set is transformed to the form equivalent to the measurements of the calibrated instrument. Then a new calibration model based on the transformed data of the calibration set is developed. The developed independent model underwent the standard procedure of validation on every calibrated instrument [1] and the main statistical parameters of the calibration model were determined.

In the table 2 data on the development of calibrations for the wheat obtained with the help of 10 samples for transfer selected on the basis of score parameter for 14 instruments is presented.

The obtained results show high accuracy of prediction of the properties of the unknown sample while using the claimed method of development of independent calibration models. In the conclusion we shall note once again that the sphere of application of the claimed method is not limited to Fourier spectrum analyzer or spectromemters of any other type. The offered ideology can be applied to different instruments in which some properties of the sample are determined by multiple measurements of other properties.

Table 2 The results of development of calibration models using the calibration transfer samples selected on the basis of SCORE parameter

* - the registration of specrum was not performed

| Component | Number of the instr. / number of the sample | Reference value | Master instrument | 1 | 2 | 3 | 4 | 5 | 6 | 7 |
|---|---|---|---|---|---|---|---|---|---|---|
| protein | 470 | 13.94 | 14.09 | 14.07 | 13.83 | 13.88 | * | * | 14.09 | 13.98 |
| | 471 | 13.29 | 13.89 | 14.11 | 13.74 | 13.83 | 13.94 | 13.82 | 14.05 | 14.29 |
| | 472 | 12.66 | 12.88 | 12.90 | 12.55 | 12.57 | 12.64 | 12.76 | 12.72 | 12.82 |
| | 473 | 12.53 | 12.62 | 12.72 | 12.61 | 12.40 | 12.48 | 12.29 | 12.59 | 12.82 |
| | 474 | 13.11 | 12.71 | 13.15 | 12.75 | 12.71 | 12.83 | 12.79 | 12.98 | 13.02 |
| | 475 | 13.86 | 14.17 | 14.27 | 13.90 | 13.98 | 13.87 | 13.88 | 14.13 | 14.28 |
| | 476 | 12.01 | 12.06 | 12.40 | 12.21 | 11.82 | 12.17 | 12.08 | 12.33 | 12.38 |
| | 477 | 13.06 | 13.55 | 13.62 | 13.41 | 13.38 | 13.36 | 13.60 | 13.59 | 13.60 |
| | 478 | 12.28 | 12.61 | 12.71 | 12.41 | 12.43 | 12.30 | 12.61 | 12.69 | 12.74 |
| | 479 | 12.78 | 12.60 | 12.85 | 12.44 | 12.52 | 12.38 | 12.51 | 12.73 | 12.89 |
| | SEV | | 0.34 | 0.31 | 0.29 | 0.31 | 0.33 | 0.38 | 0.33 | 0.44 |
| gluten | 470 | 23.60 | 23.29 | 22.96 | 23.15 | 23.57 | * | * | 23.47 | 22.57 |
| | 471 | 23.90 | 23.03 | 23.00 | 22.65 | 23.24 | 23.70 | 23.26 | 23.32 | 23.54 |
| | 472 | 20.00 | 20.41 | 20.33 | 19.88 | 20.42 | 20.38 | 20.60 | 20.18 | 20.13 |
| | 473 | 19.10 | 18.49 | 18.98 | 19.28 | 18.98 | 19.22 | 18.28 | 18.90 | 18.93 |
| | 474 | 20.00 | 20.30 | 20.81 | 20.53 | 20.51 | 21.18 | 20.83 | 20.80 | 20.30 |
| | 475 | 23.80 | 23.62 | 23.48 | 23.46 | 23.63 | 23.65 | 23.45 | 23.48 | 23.50 |
| | 476 | 17.80 | 18.96 | 19.05 | 19.25 | 18.45 | 19.31 | 19.05 | 19.27 | 18.84 |
| | 477 | 21.60 | 22.44 | 21.99 | 22.18 | 22.21 | 22.13 | 22.63 | 22.14 | 21.82 |
| | 478 | 19.30 | 19.18 | 18.87 | 18.87 | 19.17 | 19.05 | 19.77 | 19.16 | 18.58 |
| | 479 | 18.70 | 19.05 | 19.08 | 18.62 | 19.16 | 18.88 | 19.01 | 19.19 | 19.01 |
| | SEV | | 0.65 | 0.82 | 1.14 | 0.72 | 0.76 | 0.65 | 0.78 | 0.68 |
| glassiness | 470 | 50.00 | 49.96 | 49.39 | 49.81 | 50.32 | * | * | 49.74 | 49.29 |
| | 471 | 50.00 | 50.72 | 49.80 | 49.11 | 50.05 | 50.59 | 50.21 | 50.09 | 50.47 |
| | 472 | 47.00 | 49.06 | 47.65 | 47.82 | 48.29 | 48.20 | 48.48 | 48.11 | 48.74 |
| | 473 | 45.00 | 45.71 | 46.57 | 46.68 | 45.94 | 46.70 | 45.09 | 46.19 | 46.19 |
| | 474 | 46.00 | 49.05 | 48.15 | 48.60 | 48.59 | 48.50 | 48.92 | 48.38 | 48.49 |
| | 475 | 50.00 | 50.64 | 50.28 | 50.56 | 50.58 | 50.09 | 51.16 | 49.76 | 50.26 |
| | 476 | 50.00 | 48.24 | 47.48 | 47.97 | 46.85 | 48.10 | 48.11 | 47.98 | 47.48 |
| | 477 | 45.00 | 50.90 | 49.75 | 50.22 | 50.28 | 50.29 | 50.87 | 49.70 | 50.49 |
| | 478 | 47.00 | 47.27 | 46.17 | 46.61 | 47.51 | 47.37 | 47.64 | 46.79 | 45.55 |
| | 479 | 48.00 | 46.58 | 45.78 | 46.00 | 45.81 | 46.27 | 46.06 | 46.13 | 45.45 |
| | SEV | | 2.37 | 2.30 | 2.36 | 2.41 | 2.36 | 2.82 | 2.06 | 2.49 |
| moisture | 470 | 11.50 | 11.03 | 10.92 | 11.04 | 10.94 | * | * | 10.95 | 11.08 |
| | 471 | 11.00 | 11.06 | 10.96 | 11.08 | 11.01 | 10.99 | 11.04 | 11.01 | 10.95 |
| | 472 | 11.00 | 10.91 | 10.96 | 10.98 | 10.94 | 10.96 | 10.95 | 10.98 | 10.90 |
| | 473 | 11.50 | 11.48 | 11.31 | 11.42 | 11.36 | 11.48 | 11.50 | 11.33 | 11.29 |
| | 474 | 11.00 | 10.89 | 10.80 | 10.88 | 10.85 | 10.85 | 10.91 | 10.88 | 10.78 |
| | 475 | 11.00 | 11.09 | 11.04 | 11.12 | 11.07 | 11.15 | 11.12 | 11.06 | 11.02 |
| | 476 | 11.00 | 11.41 | 11.37 | 11.35 | 11.43 | 11.38 | 11.41 | 11.33 | 11.29 |
| | 477 | 10.50 | 10.76 | 10.78 | 10.71 | 10.74 | 10.83 | 10.69 | 10.73 | 10.72 |
| | 478 | 12.00 | 11.71 | 11.55 | 11.63 | 11.59 | 11.73 | 11.63 | 11.60 | 11.58 |
| | 479 | 12.00 | 11.82 | 11.66 | 11.88 | 11.77 | 11.86 | 11.82 | 11.74 | 11.65 |
| | SEV | | 0.25 | 0.33 | 0.25 | 0.30 | 0.21 | 0.21 | 0.28 | 0.28 |

| compo nent | Number of the instr / Number of the sample | 8 | 9 | 10 | 11 | 12 | 13 | 14 |
|---|---|---|---|---|---|---|---|---|
| Protein | 470 | 13.98 | 14.11 | 14.13 | 14.16 | 14.27 | 14.21 | 14.12 |
| | 471 | 14.09 | 14.24 | 14.14 | 14.12 | 14.24 | 14.16 | 14.11 |
| | 472 | 12.78 | 12.86 | 12.74 | 12.75 | 12.70 | 12.82 | 12.76 |
| | 473 | 12.58 | 12.75 | 12.75 | 12.82 | 12.69 | 12.79 | 12.68 |
| | 474 | 12.82 | 13.04 | 13.04 | 13.09 | 13.02 | 13.04 | 13.05 |
| | 475 | 13.99 | 14.17 | 14.12 | 14.28 | 14.29 | 14.16 | 14.25 |
| | 476 | 12.02 | 12.04 | 12.08 | 12.23 | 12.24 | 12.30 | 12.27 |
| | 477 | 13.58 | 13.69 | 13.76 | 13.68 | 13.73 | 13.64 | * |
| | 478 | 12.76 | 12.76 | 12.81 | 12.85 | 12.68 | 12.67 | 12.65 |
| | 479 | 12.63 | 12.71 | 12.82 | 12.86 | 12.81 | 12.91 | 12.84 |
| | SEV | 0.35 | 0.48 | 0.42 | 0.45 | 0.45 | 0.40 | 0.51 |
| Gluten | 470 | 23.15 | 23.09 | 23.68 | 23.26 | 23.33 | 23.36 | 23.39 |
| | 471 | 23.20 | 23.21 | 23.55 | 23.07 | 23.22 | 23.17 | 23.46 |
| | 472 | 20.27 | 20.16 | 20.26 | 19.84 | 19.76 | 19.74 | 19.85 |
| | 473 | 18.73 | 18.87 | 18.88 | 18.99 | 18.62 | 19.04 | 19.75 |
| | 474 | 20.08 | 20.51 | 20.91 | 20.70 | 20.39 | 20.56 | 20.40 |
| | 475 | 23.22 | 23.17 | 23.45 | 23.49 | 23.42 | 23.15 | 23.71 |
| | 476 | 18.38 | 17.99 | 18.54 | 18.58 | 18.60 | 18.62 | 18.57 |
| | 477 | 21.96 | 22.17 | 22.97 | 22.27 | 22.13 | 22.07 | * |
| | 478 | 19.13 | 19.00 | 19.56 | 19.31 | 18.61 | 18.49 | 19.48 |
| | 479 | 18.76 | 18.74 | 19.24 | 19.12 | 19.00 | 19.12 | 20.19 |
| | SEV | 0.69 | 0.64 | 0.65 | 0.65 | 0.60 | 0.70 | 0.65 |
| glassiness | 470 | 50.22 | 50.25 | 50.85 | 50.38 | 50.21 | 50.28 | 51.21 |
| | 471 | 50.31 | 50.30 | 50.04 | 50.07 | 50.18 | 50.20 | 50.76 |
| | 472 | 48.14 | 48.23 | 48.16 | 48.17 | 48.11 | 47.82 | 49.03 |
| | 473 | 46.44 | 46.09 | 46.43 | 46.47 | 46.14 | 46.65 | 46.61 |
| | 474 | 47.88 | 48.40 | 49.01 | 48.87 | 47.95 | 48.29 | 48.66 |
| | 475 | 50.23 | 50.33 | 50.43 | 50.45 | 50.46 | 49.97 | 51.38 |
| | 476 | 47.63 | 46.85 | 47.31 | 47.46 | 47.42 | 47.37 | 48.22 |
| | 477 | 49.80 | 50.44 | 50.80 | 50.42 | 49.99 | 50.57 | * |
| | 478 | 46.98 | 46.87 | 47.18 | 46.81 | 46.14 | 45.99 | 47.08 |
| | 479 | 45.90 | 45.38 | 45.85 | 46.18 | 45.94 | 45.35 | 45.22 |
| | SEV | 2.18 | 2.54 | 2.58 | 2.54 | 2.36 | 2.41 | 2.00 |
| Moisture | 470 | 10.97 | 10.98 | 10.95 | 10.96 | 10.89 | 10.96 | 11.09 |
| | 471 | 10.99 | 11.00 | 10.97 | 10.99 | 10.94 | 10.80 | 11.16 |
| | 472 | 10.99 | 10.89 | 11.03 | 10.90 | 10.87 | 10.85 | 11.09 |
| | 473 | 11.38 | 11.33 | 11.35 | 11.33 | 11.35 | 11.34 | 11.48 |
| | 474 | 10.82 | 10.81 | 10.80 | 10.82 | 10.71 | 10.73 | 11.22 |
| | 475 | 11.07 | 10.98 | 11.04 | 11.01 | 10.99 | 11.04 | 11.11 |
| | 476 | 11.42 | 11.36 | 11.38 | 11.36 | 11.27 | 11.32 | 11.46 |
| | 477 | 10.77 | 10.74 | 10.75 | 10.71 | 10.65 | 10.67 | * |
| | 478 | 11.62 | 11.51 | 11.61 | 11.55 | 11.45 | 11.40 | 11.51 |
| | 479 | 11.75 | 11.71 | 11.72 | 11.71 | 11.61 | 11.55 | 11.51 |
| | SEV | 0.28 | 0.31 | 0.30 | 0.31 | 0.36 | 0.36 | 0.35 |

1. ASTM standard, E 1655-00, Practices for Infrared Multivariate Quantitative Analysis.

2. U.S. Pat. No. 4,944,589, G01J 3/18, Karl G. Nordgvist, 31. 07. 1990

3. U.S. Pat. No. 6,615,151, G01N 015/06, Thomas Scecina et al., 02. 09. 2003

4. U.S. Pat. No. 4,866,644, G01N 37/00, John S. Shenk et al., 12. 09. 1989

5. U.S. Pat. No. 5,459,677, G01N 021/01, Bruce R. Kowalski et al., 17. 10. 1995

6. European Patent, EP 0 663 997 B1, G01N 021/27, Steven Maggard, 26. 07.1995

7. U.S. Pat. No. 5,347,475, G01J 003/02, James L. Taylor et al., 13. 09. 1994

8. Operation manual InfraLUM FT-10, 152.00.00.00.P3.

**Claims**

1. A method for the development of independent multivariate calibration models comprising the following steps:

   - selecting a set of calibration samples with known secondary properties;
   - measuring the primary properties for each calibration sample on a reference instrument;
   - converting the measurement results of the primary properties for each calibration sample obtained on the reference instrument to a structure which is equivalent to measurement results for the calibration samples obtained on a calibratable instrument, wherein the conversion is made using correlations of calibration transfer,
   - comparing the measurement results of the primary properties for each calibration sample measured on the reference instrument which were converted to a structure being equivalent to measurement results obtained on a calibrated instrument with the known secondary properties of the calibration samples,
   - generating an independent multivariate calibration model by methods of multivariate regression analysis, wherein the independent multivariate calibration model expresses secondary properties of the samples by means of the primary properties measured on the calibrated instrument,
   ***characterized in that***
   - the mathematical correlations of calibration transfer are determined by:
   - selecting the set of samples for calibration transfer;
   - measuring the primary properties of each sample for calibration transfer on both the reference instrument and the calibrated instrument;
   - comparing the results of measurements of the primary properties of the samples for calibration transfer obtained on the reference instrument with the results of measurements of the primary properties of the same samples obtained on the calibrated instrument, using thereby the methods of multivariate regression analysis;

   wherein the independent multivariate calibration model is selected using quantitative parameters of calibration validation.

2. The method of Claim 1, wherein before correlating the results of measurements of the primary properties of the transfer samples on the both instruments, these results are subjected to normalization procedure to reveal a difference in the calibrated and reference instrument responses, and the results of measurements of the primary properties of the calibration samples on the reference instrument are subjected to the same normalization procedure before their transformation to a form equivalent to the calibrated instrument responses for these samples.

3. The method of Claim 1, wherein the samples which define the range of possible differences in results of measurements of the primary properties on both the calibrated and reference instruments are selected in the set of transfer samples.

4. The method of Claim 1, wherein the samples with known secondary properties are selected into the set of transfer samples and changes in the secondary properties of the selected samples define the range of possible differences in analyzed secondary properties.

5. The method of Claim 1, wherein if the validation procedure shows inconsistent model accuracy, the estimated calibrated instrument responses for each calibration sample are analyzed by outlier statistics for the detection of outlier samples, and the detected outlier samples are discarded from the set of calibration samples before the development of an updated independent calibration model.

6. The method of Claim 1, wherein if the validation procedure shows inconsistent model accuracy, the estimated calibrated instrument responses for each calibration sample are supplemented by results of measurements of the primary properties of additional calibration samples with known secondary properties on the target instrument whereby the set of calibration samples is expanded, and an updated independent calibration model is developed by processing the target instrument responses for the expanded set of calibration samples.

7. The method of Claim 6, wherein the calibrated instrument responses for an expanded set of calibration samples are analyzed by outlier statistics for the detection of outlier samples, and the detected outlier samples are discarded from the expanded set of calibration samples before the development of updated independent calibration model.

8. The method of Claim 6, wherein the responses of any instrument (including a reference instrument) for an expanded set of calibration samples are estimated using transformation relationships obtained after measurements of the transfer samples on this instrument and correlating the results of measurements of the primary properties of transfer samples on this instrument with results of measurements of the same samples on the target instrument, and then a new independent calibration model is developed at this instrument by processing the estimated responses of this instrument for the expanded calibration set by methods of regression analysis so that a number of calibration constants in the relationships between the primary properties and the secondary properties are generated; in this case, the target instrument stands for a new reference instrument and the other instrument stands for a new target instrument.

9. The method of Claim 1, wherein if the validation procedure shows inconsistent model accuracy, the estimated calibrated instrument responses for each calibration sample and (or) the corresponding known secondary properties of the calibration samples are subjected to normalization procedure before the development of an updated independent calibration model.

10. The method of Claim 6, wherein if the validation procedure shows inconsistent model accuracy, the calibrated instrument responses for an expanded set of calibration samples and (or) the corresponding known secondary properties of the calibration samples are subjected to normalization procedure before the development of an updated independent calibration model.

11. The method of Claim 1, wherein the reference and calibrated instruments are spectrometers and the measured primary properties are the light absorption, reflection or scattering at different wavelengths.

12. The method of Claim 11, wherein the reference and target spectrometers are based on the principles of Fourier Transform spectroscopy and a wavelength shift is neglected in the transformation relationships for estimating the target instrument response for each calibration sample from of the reference instrument response for this sample.

**Patentansprüche**

1. Verfahren zur Entwicklung von unabhängigen multivariaten Kalibrationsmodellen, das die folgenden Schritte umfasst:

   - Auswählen eines Satzes von Kalibrationsproben mit bekannten sekundären Eigenschaften,
   - Messen der primären Eigenschaften für jede Kalibrationsprobe an einem Referenzgerät,
   - Umwandeln der Messergebnisse der primären Eigenschaften für jede Kalibrationsprobe, die an dem Referenzgerät erhalten wurden, zu einer Struktur, die äquivalent zu Messergebnissen für die Kalibrationsproben sind, die an einem kalibrierbaren Gerät erhalten wurden, wobei die Umwandlung unter Verwendung von Korrelationen zur Kalibrationsübertragung erfolgt,
   - Vergleichen der Messergebnisse der primären Eigenschaften für jede Kalibrationsprobe, die an dem Referenzgerät gemessen wurden und die zu einer Struktur umgewandelt wurden, die äquivalent zu Messergebnissen ist, die an einem kalibrierten Gerät gemessen wurden, mit den bekannten sekundären Eigenschaften der Kalibrationsproben,

- Erzeugen eines unabhängigen multivariaten Kalibrationsmodells durch Verfahren zur multivariaten Regressionsanalyse, wobei das unabhängige multivariate Kalibrationsmodel sekundäre Eigenschaften der Proben mittels der primären Eigenschaften ausdrückt, die an dem kalibrierten Gerät gemessen wurden,

**dadurch gekennzeichnet, dass**

- die mathematischen Korrelationen zur Kalibrationsübertragung bestimmt werden durch:
- Auswählen des Satzes von Proben zur Kalibrationsübertragung,
- Messen der primären Eigenschaften jeder Probe zur Kalibrationsübertragung sowohl an dem Referenzgerät als auch an dem kalibrierten Gerät,
- Vergleichen der Messergebnisse der primären Eigenschaften der Proben zur Kalibrationsübertragung, die an dem Referenzgerät erhalten wurden, mit den Messergebnissen der primären Eigenschaften der gleichen Proben, die an dem kalibrierten Gerät erhalten wurden, wobei dabei die Verfahren zur multivariaten Regressionsanalyse verwendet werden;

wobei das unabhängige multivariate Kalibrationsmodell unter Verwendung quantitativer Parameter zur Kalibrationsvalidierung ausgewählt wird.

2. Verfahren nach Anspruch 1, wobei vor Korrelierung der Messergebnisse der primären Eigenschaften der Übertragungsproben an den beiden Geräten diese Ergebnisse einer Normalisierungsprozedur unterzogen werden, um einen Unterschied bei den Ansprechwerten des kalibrierten Geräts und des Referenzgeräts aufzudecken, und die Messergebnisse der primären Eigenschaften der Kalibrationsproben an dem Referenzgerät vor ihrer Transformation der gleichen Normalisierungsprozedur unterzogen werden, um ein Äquivalent zu den Ansprechwerten des kalibrierten Geräts für diese Proben zu bilden.

3. Verfahren nach Anspruch 1, wobei die Proben, welche die Spanne möglicher Unterschiede bei Messergebnissen der primären Eigenschaften an sowohl dem kalibrierten Gerät wie auch dem Referenzgerät definieren, in dem Satz von Übertragungsproben ausgewählt werden.

4. Verfahren nach Anspruch 1, wobei die Proben mit bekannten sekundären Eigenschaften in den Satz von Übertragungsproben ausgewählt werden und Änderungen bei den sekundären Eigenschaften der ausgewählten Proben die Spanne möglicher Unterschiede bei analysierten sekundären Eigenschaften definieren.

5. Verfahren nach Anspruch 1, wobei, falls die Validierungsprozedur eine uneinheitliche Modellgenauigkeit zeigt, die geschätzten Ansprechwerte des kalibrierten Geräts für jede Kalibrationsprobe durch eine Ausreisser-Statistik zur Erfassung von Ausreisser-Proben analysiert werden, und vor der Entwicklung eines aktualisierten unabhängigen Kalibrationsmodells die erfassten Ausreisser-Proben aus dem Satz von Kalibrationsproben verworfen werden.

6. Verfahren nach Anspruch 1, wobei, falls die Validierungsprozedur eine uneinheitliche Modellgenauigkeit zeigt, die geschätzten Ansprechwerte des kalibrierten Geräts für jede Kalibrationsprobe durch Messergebnisse der primären Eigenschaften zusätzlicher Kalibrationsproben mit bekannten sekundären Eigenschaften an dem Zielgerät ergänzt werden, wodurch der Satz von Kalibrationsproben erweitert wird, und wobei ein aktualisiertes unabhängiges Kalibrationsmodell durch Verarbeiten der Zielgerätansprechwerte für den erweiterten Satz von Kalibrationsproben entwickelt wird.

7. Verfahren nach Anspruch 6, wobei die Ansprechwerte eines kalibrierten Geräts für einen erweiterten Satz von Kalibrationsproben durch eine Ausreisser-Statistik zur Erfassung von Ausreisser-Proben analysiert werden, und vor der Entwicklung eines aktualisierten unabhängigen Kalibrationsmodells die erfassten Ausreisser-Proben aus dem erweiterten Satz von Kalibrationsproben verworfen werden.

8. Verfahren nach Anspruch 6, wobei die Ansprechwerte von irgendeinem Gerät (einschließlich eines Referenzgeräts) für einen erweiterten Satz von Kalibrationsproben unter Verwendung von Transformationsbeziehungen, die nach Messungen der Übertragungsproben an diesem Gerät erhalten wurden, und durch Korrelieren der Messergebnisse der primären Eigenschaften von Übertragungsproben an diesem Gerät mit Messergebnissen der gleichen Proben an dem Zielgerät geschätzt werden und dann durch Verarbeiten der geschätzten Ansprechwerte dieses Geräts für den erweiterten Kalibrationssatz durch Verfahren zur Regressionsanalyse ein neues unabhängiges Kalibrationsmodell an diesem Gerät entwickelt wird, so dass eine Anzahl von Kalibrationskonstanten in den Beziehungen zwischen den primären Eigenschaften und den sekundären Eigenschaften erzeugt werden, wobei in diesem Fall das Zielgerät für ein neues Referenzgerät steht und das andere Gerät für ein neues Zielgerät steht.

9. Verfahren nach Anspruch 1, wobei, falls die Validierungsprozedur eine uneinheitliche Modellgenauigkeit zeigt, die geschätzten Ansprechwerte des kalibrierten Geräts für jede Kalibrationsprobe und (oder) die entsprechenden bekannten sekundären Eigenschaften der Kalibrationsproben vor der Entwicklung eines aktualisierten unabhängigen Kalibrationsmodells einer Normalisierungsprozedur unterzogen werden.

10. Verfahren nach Anspruch 6, wobei, falls die Validierungsprozedur eine uneinheitliche Modellgenauigkeit zeigt, die Ansprechwerte des kalibrierten Geräts für einen erweiterten Satz von Kalibrationsproben und (oder) die entsprechenden bekannten sekundären Eigenschaften der Kalibrationsproben vor der Entwicklung eines aktualisierten unabhängigen Kalibrationsmodells einer Normalisierungsprozedur unterzogen werden.

11. Verfahren nach Anspruch 1, wobei die Referenzgeräte und die kalibrierten Geräte Spektrometer sind und die gemessenen primären Eigenschaften Lichtabsorption, Reflexion oder Streuung bei unterschiedlichen Wellenlängen sind.

12. Verfahren nach Anspruch 11, wobei die Referenz- und Zielspektrometer auf den Prinzipien der Fourier-Transformations-Spektroskopie beruhen und eine Wellenlängenverschiebung in den Transformationsbeziehungen zum Schätzen des Ansprechwerts des Zielgeräts für jede Kalibrationsprobe aus dem Ansprechwert des Referenzgeräts für diese Probe vernachlässigt wird.

**Revendications**

1. Procédé de développement de modèles d'étalonnage à variables multiples indépendants comprenant les étapes suivantes :

   - la sélection d'un ensemble d'échantillons d'étalonnage avec des propriétés secondaires connues ;
   - la mesure des propriétés primaires pour chaque échantillon d'étalonnage sur un instrument de référence ;
   - la conversion des résultats de mesures des propriétés primaires pour chaque échantillon d'étalonnage obtenus sur l'instrument de référence en une structure qui est équivalente à des résultats de mesure pour les échantillons d'étalonnage obtenus sur un instrument étalonnable, dans lequel la conversion est effectuée en utilisant des corrélations de transfert d'étalonnage,
   - la comparaison des résultats de mesures des propriétés primaires pour chaque échantillon d'étalonnage mesuré sur l'instrument de référence qui ont été convertis en une structure étant équivalente à des résultats de mesures obtenus sur un instrument étalonné avec les propriétés secondaires connues des échantillons d'étalonnage,
   - la génération d'un modèle d'étalonnage à variables multiples indépendant par des procédés d'analyse de régression à variables multiples, dans lequel le modèle d'étalonnage à variables multiples indépendant exprime des propriétés secondaires des échantillons au moyen des propriétés primaires mesurées sur l'instrument étalonné, *caractérisé en ce que*
   - les corrélations mathématiques de transfert d'étalonnage sont déterminées par :
   - la sélection de l'ensemble d'échantillons pour un transfert d'étalonnage ;
   - la mesure des propriétés primaires de chaque échantillon pour un transfert d'étalonnage sur les deux de l'instrument de référence et de l'instrument étalonné ;
   - la comparaison des résultats de mesures des propriétés primaires des échantillons pour un transfert d'étalonnage obtenus sur l'instrument de référence aves les résultats de mesures des propriétés primaires des mêmes échantillons obtenus sur l'instrument étalonné, utilisant ainsi les procédés d'analyse de régression à variables multiples ;

   dans lequel le modèle d'étalonnage à variables multiples indépendant est sélectionné en utilisant des paramètres quantitatifs de validation d'étalonnage.

2. Procédé selon la revendication 1, dans lequel, avant la corrélation des résultats de mesures des propriétés primaires des échantillons de transfert sur les deux instruments, ces résultats sont soumis à une procédure de normalisation pour révéler une différence dans les réponses de l'instrument étalonné et de l'instrument de référence, et les résultats de mesures des propriétés primaires des échantillons d'étalonnage sur l'instrument de référence sont soumis à la même procédure de normalisation avant leur transformation en une forme équivalente aux réponses de l'instrument étalonné pour ces échantillons.

**3.** Procédé selon la revendication 1, dans lequel les échantillons qui définissent la plage de différences possibles dans les résultats de mesures des propriétés primaires sur les deux de l'instrument étalonné et l'instrument de référence sont sélectionnés dans l'ensemble d'échantillons de transfert.

**4.** Procédé selon la revendication 1, dans lequel les échantillons avec des propriétés secondaires connues sont sélectionnés dans l'ensemble d'échantillons de transfert et des changements des propriétés secondaires des échantillons sélectionnés définissent la plage de différences possibles dans des propriétés secondaires analysées.

**5.** Procédé selon la revendication 1, dans lequel, si la procédure de validation montre une précision de modèle incohérente, les réponses estimées de l'instrument étalonné pour chaque échantillon d'étalonnage sont analysées par statistique des cas déviants pour la détection d'échantillons déviants, et les échantillons déviants détectés sont rejetés de l'ensemble d'échantillons d'étalonnage avant le développement d'un modèle d'étalonnage indépendant mis à jour.

**6.** Procédé selon la revendication 1, dans lequel, si la procédure de validation montre une précision de modèle incohérente, les réponses estimées de l'instrument étalonné pour chaque échantillon d'étalonnage sont complétées par des résultats de mesures des propriétés primaires d'échantillons d'étalonnage additionnels avec des propriétés secondaires connues sur l'instrument cible, d'où il résulte que l'ensemble d'échantillons d'étalonnage est étendu, et un modèle d'étalonnage indépendant mis à jour est développé en traitant les réponses de l'instrument cible pour l'ensemble étendu d'échantillons d'étalonnage.

**7.** Procédé selon la revendication 6, dans lequel les réponses de l'instrument étalonné pour un ensemble étendu d'échantillons d'étalonnage sont analysées par statistique des cas déviants pour la détection d'échantillons déviants, et les échantillons déviants détectés sont rejetés de l'ensemble étendu d'échantillons d'étalonnage avant le développement d'un modèle d'étalonnage indépendant mis à jour.

**8.** Procédé selon la revendication 6, dans lequel les réponses d'un instrument quelconque (incluant un instrument de référence) pour un ensemble étendu d'échantillons d'étalonnage sont estimées en utilisant des relations de transformation obtenues après des mesures des échantillons de transfert sur cet instrument et en corrélant les résultats de mesures des propriétés primaires des échantillons de transfert sur cet instrument avec des résultats de mesures des mêmes échantillons sur l'instrument cible, et ensuite un nouveau modèle d'étalonnage indépendant est développé au niveau de cet instrument en traitant les réponses estimées de cet instrument pour l'ensemble étendu d'étalonnage par des procédés d'analyse de régression, de telle sorte qu'un certain nombre de constantes d'étalonnage dans les relations entre les propriétés primaires et les propriétés secondaires est généré ; dans ce cas, l'instrument cible devient un nouvel instrument de référence et l'autre instrument devient un nouvel instrument cible.

**9.** Procédé selon la revendication 1, dans lequel, si la procédure de validation montre une précision de modèle incohérente, les réponses estimées de l'instrument étalonné pour chaque échantillon d'étalonnage et (ou) les propriétés secondaires connues correspondantes des échantillons d'étalonnage sont soumises à une procédure de normalisation avant le développement d'un modèle d'étalonnage indépendant mis à jour.

**10.** Procédé selon la revendication 6, dans lequel, si la procédure de validation montre une précision de modèle incohérente, les réponses de l'instrument étalonné pour un ensemble étendu d'échantillons d'étalonnage et (ou) les propriétés secondaires connues correspondantes des échantillons d'étalonnage sont soumises à une procédure de normalisation avant le développement d'un modèle d'étalonnage indépendant mis à jour.

**11.** Procédé selon la revendication 1, dans lequel les instruments de référence et étalonnés sont des spectromètres et les propriétés primaires mesurées sont l'absorption, la réflexion ou la diffusion de lumière à différentes longueurs d'onde.

**12.** Procédé selon la revendication 11, dans lequel les spectromètres de référence et cible sont basés sur les principes d'une spectroscopie à Transformée de Fourier et un décalage de longueur d'onde est négligé dans les relations de transformation pour estimer la réponse de l'instrument cible pour chaque échantillon d'étalonnage par rapport à la réponse de l'instrument de référence pour cet échantillon.

```
┌─────────────────────────────────────────┐
│ Selection of a set of transfer samples   │
└─────────────────────────────────────────┘
                    │
                    ▼
┌─────────────────────────────────────────┐
│ Measuring a plurality of the primary     │
│ properties for each transfer sample on   │     ┌──────────────────────┐
│ both reference and target instruments    │     │ Selecting a set of   │
└─────────────────────────────────────────┘     │ calibration samples  │
                    │                            │ with the known       │
                    ▼                            │ secondary            │
┌─────────────────────────────────────────┐     │ properties to be     │
│ Normalization procedure                  │     │ analyzed             │
└─────────────────────────────────────────┘     └──────────────────────┘
                    │                                       │
                    ▼                                       ▼
         ◇ Correlating the results of ◇          ┌──────────────────────┐
           measurements on the                   │ Measuring a plurality│
           reference and target                  │ of the primary       │
           instruments                           │ properties for each  │
                    │                            │ calibration sample on│
                    ▼                            │ the reference        │
┌─────────────────────────────────────────┐     │ instrument           │
│ Determination of transformation          │     └──────────────────────┘
│ relationships                            │                │
└─────────────────────────────────────────┘                ▼
                    │                            ┌──────────────────────┐
                    │                            │ Normalization        │
                    └──────────○◄────────────────│ procedure            │
                               │                 └──────────────────────┘
                               ▼
         ┌───────────────────────────────────────────┐
         │ Estimation of the target instrument        │
         │ response for each calibration sample from  │
         │ the reference instrument response for the  │
         │ same sample                                │
         └───────────────────────────────────────────┘
                               │
                               ▼
         ┌───────────────────────────────────────────┐
         │ Normalization procedure                    │
         └───────────────────────────────────────────┘
                               │
                               ▼
         ┌───────────────────────────────────────────┐
┌───────────────┐│ Determination of mathematical             │
│ Detection of  ││ relationships for calibration             │
│ outlier       │└───────────────────────────────────────────┘
│ samples       │               │
└───────────────┘               ▼
        ▲                ◇ Validation ◇
        │                  procedure
        └────────────────────│
                             ▼
                  ┌──────────────────┐
                  │ END              │
                  └──────────────────┘
```

Fig.1

23